# EUROPÄISCHE PATENTSCHRIFT

(11) **EP 0 894 053 B1**
(45) Veröffentlichungstag und Bekanntmachung des Hinweises auf die Patenterteilung: **14.03.2001**
(21) Anmeldenummer: 97915467.1
(22) Anmeldetag: 01.04.1997
(51) Int. Cl.: B60G 17/015

(54) **AKTIVES FEDERUNGSSYSTEM**
ACTIVE SUSPENSION SYSTEM
SYSTEME ACTIF DE SUSPENSION

(30) Priorität: 20.04.1996 DE 19615737
(43) Veröffentlichungstag der Anmeldung: 03.02.1999
(73) Patentinhaber: DaimlerChrysler AG, 70567 Stuttgart (DE)
(72) Erfinder: STREITER, Ralph, D-70180 Stuttgart (DE)
(86) Internationale Anmeldenummer: EP9701614
(87) Internationale Veröffentlichungsnummer: WO9739905

(56) Entgegenhaltungen:
- DE-A- 3 932 476
- DE-A- 4 138 831
- DE-A- 4 139 412
- DE-A- 4 217 325
- DE-A- 4 231 641
- DE-A- 4 303 160
- DE-A- 4 323 552
- DE-A- 4 414 022
- GB-A- 2 255 056
- GB-A- 2 271 535
- PATENT ABSTRACTS OF JAPAN vol. 012, no. 052 (M-668), 17.Februar 1988 & JP 62 198510 A (NISSAN MOTOR CO LTD), 2.September 1987,
- PATENT ABSTRACTS OF JAPAN vol. 096, no. 008, 30.August 1996 & JP 08 099519 A (NISSAN DIESEL MOTOR CO LTD), 16.April 1996,

## Beschreibung

Die Erfindung betrifft ein aktives Federungssystem für Fahrzeuge, mit zwischen einem Fahrzeugaufbau und Rädern mit darin oder daran vorhandenen Federelementen, insbesondere Reifenfedern, angeordneten Abstützaggregaten, die jeweils ein aktiv hubverstellbares Stellorgan und eine dazu in Reihe angeordnete passive Feder aufweisen, und mit automatischer Steuerung der Stellorgane, wobei jedem Abstützaggregat ein Wegsensor zur Erzeugung eines mit der Hubstellung des Abstützaggregates korrelierten Signales zugeordnet und am Fahrzeugaufbau eine Anordnung von Beschleunigungssensoren zur Erzeugung von Signalen für aufbauseitige Längs- und Querbeschleunigungen sowie Hubbewegungen vorgesehen ist, und wobei zur Steuerung der Stellorgane dienende Stellsignale einen durch Signale von Beschleunigungssensoren erzeugten ersten Anteil und einen durch Signale von Weg- und Beschleunigungssensoren erzeugten zweiten Anteil umfassen.

Ein derartiges Federungssystem ist Gegenstand der DE 39 32 476 A1. Nach dieser Druckschrift sind hydropneumatische Feder- und Abstützaggregate vorgesehen, bei denen die passive Feder durch einen pneumatischen Federspeicher gebildet wird. Diese ist mit einem Kolbenarbeitsraum eines zwischen gefederter und ungefederter Masse angeordneten Kolben-Zylinder-Aggregates hydraulisch verbunden, wobei das durch die hydraulische Verbindung gebildete hydraulische "Gestänge" durch Zu- bzw. Abfuhr von hydraulischem Medium verlängert bzw. verkürzt werden kann.

Der erste Anteil der Stellsignale wird durch die Längs- und Querbeschleunigung des Aufbaus bestimmt. Der zweite Anteil der Stellsignale hängt vom Hubweg der ungefederten Masse relativ zur gefederten Masse sowie der Vertikalbeschleunigung der gefederten Masse ab.

Ein weiteres Federungssystem der eingangs angegebenen Art wird in der GB 2 255 056 A dargestellt. Hier werden Sollwerte für die Hubstellungen der Stellorgane derart ermittelt, daß durch die damit bewirkten Stellbewegungen der Stellorgane die Einfederung der Reifenfeder kompensiert wird. Eine Abstimmung dieses Federungssystems für den Konstrukteur ist vgl. schwierig, weil die vorgenannten Sollwerte unter Berücksichtigung des dynamischen Verhaltens der Reifenfeder vorgegeben werden müssen.

Bei einem aus der DE 41 38 831 A1 bekannten Federungssystem haben die zur Steuerung der Stellorgane dienenden Stellsignale einen durch Signale von Beschleunigungssensoren erzeugten ersten Anteil und eine durch Signale von Weg- und Beschleunigungssensoren erzeugten zweiten Anteil, wobei der erste Anteil durch die von Beschleunigungssensoren ermittelten Nick-, Wank- und Hubbewegungen des Aufbaus und der zweite Anteil durch Vergleich von vorgebbaren Sollwerten für die Lage des Aufbaus relativ zum Boden mit zugeordneten Werten bestimmt wird, die rechnerisch aus den Hubstellungen der Abstützaggregate und der Aufbaubeschleunigung in Längsrichtung ermittelt werden.

Die DE 42 31 641 A1 sowie die DE 44 14 022 A1 zeigen aktive Federungssysteme, bei denen eine passive mechanische Feder in Reihe zu einem hydraulischen Stellaggregat angeordnet ist, durch das sich die Hubstellung der ungefederten Masse relativ zur gefederten Masse verändern bzw. den Federhub der passiven Feder überlagernde Hubverstellungen erzeugen lassen.

Aus der DE 41 39 412 A1 ist ein aktives Federungssystem zu entnehmen, bei dem kleine, offensichtlich harte passive Federn vorgesehen sind, die nur für die Beeinflussung von höherfrequenten, geringe Amplituden aufweisenden Bewegungen des Reifens bzw. Rades und als hydropneumatische Federn ausgebildet sind. Diese Federn sind mit verstellbaren Dämpfern kombiniert.

Die DE 42 17 325 A1 bezieht sich auf eine aktive Fahrzeugfederung, bei der einzelne Eigenschwingungsformen des Aufbaus getrennt voneinander im Sinne einer "Skyhook"-Dämpfung beeinflußt werden können.

Nach der DE 29 43 486 C2 ist vorgesehen, jedem Abstützaggregat eines aktiven Federungssystems, bei dem jeweils ein hubverstellbares Stellorgan in Reihe zu einer passiven Federung angeordnet ist, einen Wegsensor zur Ermittlung des Stellweges des Stellorgans sowie einen aufbauseitigen Beschleunigungsgeber zur Ermittlung der aufbauseitigen Vertikalbeschleunigung zuzuordnen. Aus den Signalen des Beschleunigungsgebers werden zusätzlich zu den Beschleunigungssignalen weitere Signale für die Vertikalgeschwindigkeit und die Vertikallage des Aufbaus rechnerisch ermittelt. Die Stellorgane werden dann jeweils in Abhängigkeit von ihrer Hubstellung sowie den Signalen für die Vertikalbeschleunigung, die Vertikalgeschwindigkeit sowie die Vertikallage des Aufbaus gesteuert. Im Ergebnis wird damit eine gute Dämpfung von Aufbaubewegungen angestrebt.

Im übrigen ist es beispielsweise aus der DE 43 03 160 A1 grundsätzlich bekannt, bei Fahrwerken zwischen Aufbau und Rad jeweils lediglich ein aktiv steuerbares Stellorgan ohne zusätzliche, in Reihe zum Stellorgan angeordnete passive Feder vorzusehen und die Steuerung dieser Stellorgane in Abhängigkeit von zu überwachenden Parametern durch einen Soll-Istwert-Vergleich vorzunehmen. Bei derartigen Systemen muß eine außerordentlich hohe Reaktionsfähigkeit der Stellorgane sowie der Regelstrecken gegeben sein. Andernfalls würde sich mangels nachgiebiger passiver Elemente zwischen Rad und Aufbau ein außerordentlich unkomfortables Federungsverhalten ergeben.

Aufgabe der Erfindung ist es nun, ein aktives Federungssystem zu schaffen, welches hohe Fahrsicherheit mit gutem Komfort bei vergleichsweise geringem Energiebedarf zu bieten vermag.

Diese Aufgabe wird bei einem System der eingangs angegebenen Art erfindungsgemäß dadurch gelöst, daß der erste Anteil durch die von den Beschleunigungssensoren ermittelten Nick-, Wank- und Hubbewegungen des Aufbaus und der zweite Anteil durch Vergleich von vorgebbaren Sollwerten für die Lage des Aufbaus relativ zum Boden mit zugeordneten Istwerten bestimmt wird, die rechnerisch aus den Hubstellungen der Abstützaggregate und zumindest den Aufbaubeschleunigungen in Längs- und Querrichtung ermittelt werden.

Bei der Erfindung wird nur von solchen Sensoren Gebrauch gemacht, die vergleichsweise kostengünstig zur Verfügung stehen, d.h. von Wegsensoren für den Abstand zwischen Rad und Aufbau sowie von verschiedenen aufbauseitigen Beschleunigungssensoren. Hierbei werden einerseits mittels der Beschleunigungssensoren die mit Aufbaubeschleunigungen verbundenen Bewegungen des Aufbaus relativ zu einem erdfesten Bezugssystem (Inertialsystem) und außerdem Signale ausgewertet, die mit den Bodenabständen des Aufbaus an den Rädern korreliert.

Die Erfindung beruht auf dem allgemeinen Gedanken, bei den die Stellorgane steuernden Stellsignalen einerseits einen Anteil vorzusehen, der - für sich allein betrachtet - zu einer Minimierung der Aufbaubewegungen relativ zum Inertialsystem führen würde. Andererseits wird ein weiterer Signalanteil berücksichtigt, welcher - für sich allein betrachtet - die Abweichungen zwischen der Istlage des Aufbaus und einer Sollage relativ zur jeweiligen Fahrbahn minimieren würde.

Hierbei nutzt die Erfindung die Erkenntnis, daß der Kompressionszustand der in bzw. an einem Fahrzeugrad vorhandenen Federelemente, insbesondere der Reifenfeder, mit den Aufbaubeschleunigungen korreliert ist. Wenn die Nutzlast eines Fahrzeuges im wesentlichen fahrzeugfest bleibt und die träge Masse der Fahrzeugräder sowie Radaufhängungen im Vergleich zur trägen Masse des Fahrzeugaufbaus gering ist, werden die Aufbaubeschleunigungen bei einem Fahrzeug praktisch nur durch die zwischen Fahrweg und Aufbau wirksamen Kräfte bestimmt, welche zwangsläufig an den Rädern und damit an der Reifenfeder u.dgl. wirksam sein müssen. Dementsprechend repräsentieren die Beschleunigungssignale des Aufbaus auch den Zustand der Reifenfeder u.dgl. Durch die erfindungsgemäß beim zweiten Anteil der Stellsignale vorgesehene additive Verknüpfung von Signalen für Aufbaubeschleunigungen mit Weggebersignalen für die Hubstellung der Abstützaggregate stehen dann Signale zur Verfügung, die den Bodenabstand des Aufbaus unter Berücksichtigung des Zustandes der Reifenfeder wiedergeben. Da in diesem Zusammenhang insbesondere die oftmals längerfristig - etwa bei Brems- oder Beschleunigungsmanövern oder bei Kurvenfahrt des Fahrzeuges - auftretenden Längs- und Querbeschleunigungen des Aufbaus berücksichtigt werden, werden die bei diesen Aufbaubeschleunigungen besonders ausgeprägten und oftmals längerfristigen Verformungen der Reifen berücksichtigt.

Durch additive Überlagerung dieser Signalanteile mit gegebenenfalls parameterabhängigen Gewichtungsfaktoren läßt sich ein Optimum zwischen Verminderung der Aufbaubewegungen und schneller Anpassung der Aufbaulage an das Fahrbahnprofil erreichen.

Ein weiterer Vorzug der Erfindung liegt darin, daß die für die automatische Steuerung der Stellorgane benötigten Informationen mit den Sensorsignalen unmittelbar zur Verfügung gestellt werden können, ohne zeitaufwendige Signalverarbeitung.

Die Nick-, Wank- und Hubbewegungen des Aufbaus können beispielsweise mittels (zumindest) dreier Vertikalbeschleunigungssensoren ermittelt werden, die in Draufsicht auf das Fahrzeug an unterschiedlichen Positionen relativ zum Fahrzeugschwerpunkt angeordnet sind. Ein Signal über die Hubbewegung läßt sich dann durch Summierung der Signale dieser Sensoren (mit von der Lage der Sensoren abhängigen Gewichtungsfaktoren) erzeugen. Ein mit der Nickbewegung korreliertes Signal kann durch Bildung der Differenz zwischen den Signalen zweier in Fahrzeuglängsrichtung unterschiedlich angeordneter Vertikalbeschleunigungssensoren erzeugt werden. Wenn die Signale zweier in Fahrzeugquerrichtung unterschiedlich angeordneter Vertikalbeschleunigungssensoren im Sinne einer Subtraktion miteinander überlagert werden, steht ein mit der Wankbewegung korreliertes Signal zur Verfügung.

Des weiteren ist bei der Erfindung vorteilhaft, daß aufgrund der dargestellten direkten Auswertung der Sensorsignale beim erfindungsgemäßen System kein störendes Signalrauschen auftreten kann.

Ein besonderer Vorzug des erfindungsgemäßen Systems liegt darin, daß sowohl der aus den Nick-, Wank- und Hubbeschleunigungen des Aufbaus abgeleitete Signalanteil als auch der aus den Bodenabständen des Aufbaus abgeleitete Signalanteil der Stellsignale für die Stellorgane ein Maß für deren Stellgeschwindigkeit darstellen. Wenn die Stellorgane als Hydraulikorgane ausgebildet sind und durch übliche elektromagnetische Ventile gesteuert werden, so können die genannten Stellsignale unmittelbar den elektrischen Ventilstrom steuern, da der elektrische Ventilstrom bei üblichen Anordnungen proportional zur Stellgeschwindigkeit des Hydraulikorgans ist, vorausgesetzt, daß am Hoch- sowie am Niederdruckanschluß annähernd konstante Druckverhältnisse vorliegen. Eine solche hydraulische Druckversorgung läßt sich in grundsätzlich bekannter Weise leicht realisieren.

Gemäß einer bevorzugten Ausführungsform der Erfindung ist vorgesehen, das eingangs angegebene Federungssystem so auszulegen, daß bei stillstehenden Stellorganen eine hohe Progressivität der Abstützkräfte der Abstützaggregate gegeben ist, um Nick- und Wankneigungen des Aufbaus relativ zur Fahrbahn allein durch Stillstand der Stellorgane gering halten zu können. Dementsprechend brauchen die Stellorgane für einen eventuellen Nick- oder Wankausgleich nur geringe Stellhübe bei entsprechend geringer Stellgeschwindigkeit auszuführen. Falls eine Nick- oder Wankneigung des Aufbaus weich aufgefangen werden soll, genügt es, die Stellorgane nachgiebig zu schalten, d.h. im Falle hydraulischer Stellorgane kann unter Einwirkung der äußeren Kräfte Hydraulikmedium durch Öffnen entsprechender Ventile abgeführt werden. Insgesamt wird damit nur wenig Energie für einen Nick- bzw. Wankausgleich sowie eine komfortable Nick- bzw. Wankdämpfung benötigt.

Auch bei der Dämpfung aufbauseitiger Hubbewegungen bietet die harte Abstimmung der passiven Federn Vorteile. Um insgesamt ein komfortables Federungssystem zu erreichen, genügt es, im Falle eines Einfederhubes eines Rades das Stellorgan wiederum nachgiebig zu schalten, um einen Einfederstoß weich auffangen zu können.

In diesem Zusammenhang ist die weiche Einstellung der gegebenenfalls vorhandenen Dämpfer vorteilhaft; denn gegenüber Einfederhüben harte Dämpfer würden der für den Komfort wünschenswerten Nachgiebigkeit entgegenwirken.

Beim nachfolgenden Ausfederhub kann das beim vorangegangenen Einfederhub auf nachgiebig geschaltete Stellorgan vergleichsweise langsam in Ausfederrichtung aktiv nachgeführt werden. Damit wird einerseits der Energiebedarf für die Betätigung des Stellorgans vermindert. Andererseits verhält sich das Abstützaggregat auf diese Weise ähnlich einer gut abgestimmten passiven Federung, deren Dämpfer in Ausfederrichtung (Zugstufe des Dämpfers) in heute üblicher Weise im Vergleich zu seinem Verhalten in Einfederrichtung (Druckstufe des Dämpfers) hart eingestellt ist.

Im übrigen wird hinsichtlich bevorzugter Merkmale der Erfindung auf die Ansprüche sowie die nachfolgende Erläuterung der Zeichnung verwiesen, anhand der zweckmäßige Ausgestaltungen der Erfindung beschrieben werden.

Dabei zeigt
- Fig. 1: eine schaltplanartig schematisierte Prinzipdarstellung eines Abstützaggregates,

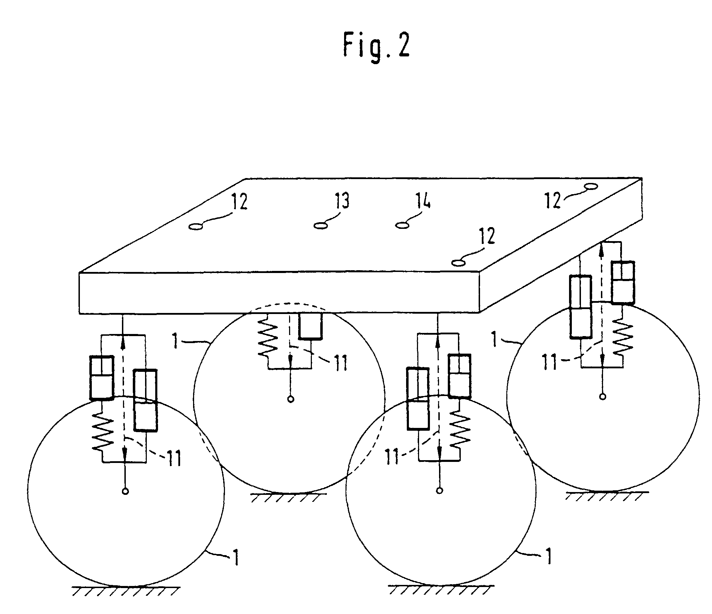

- Fig. 2: ein Fahrzeug mit erfindungsgemäßem Federungssystem in prinzipieller Darstellung und
- Fig. 3: ein Blockschaltbild der automatischen Steuerung für die hubverstellbaren Stellorgane.

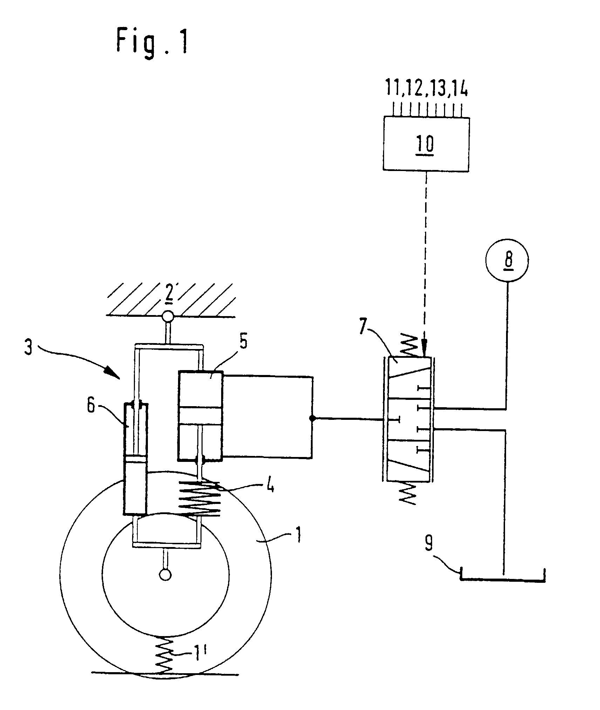

Ein jeweils zwischen einem Rad 1 und dem Chassis bzw. Aufbau 2 eines Fahrzeuges angeordnetes Abstützaggregat 3 besitzt jeweils eine passive Feder 4 sowie ein dazu in Reihe angeordnetes Hydraulikaggregat 5, welches in Fig. 1 gemäß einer bevorzugten Ausführungsform der Erfindung aufbauseitig der Feder 4 vorgesehen ist. Mittels des Hydraulikaggregates 5 läßt sich das aufbauseitige Widerlager der Feder 4 relativ zum Aufbau 2 vertikal verstellen.

Parallel zur Feder 4 oder - wie in Fig. 1 dargestellt - parallel zu Feder 4 und Hydraulikaggregat 5 ist ein Dämpfer 6 zwischen Rad 1 und Aufbau 2 angeordnet. Die dargestellte Anordnung des Dämpfers 6 bietet insofern einen Vorteil, als der Dämpfer 6 mit größerer Länge ausgebildet sein kann als es der Fall wäre, wenn der Dämpfer 6 lediglich parallel zur Feder 4 zwischen Rad 1 und Hydraulikaggregat 5 angeordnet wäre. Gleichwohl ist diese letztere Anordnung ebenfalls grundsätzlich möglich und auch vorteilhaft, weil dann das Abstützaggregat 3 bei einer Verstellung nicht gegen den Widerstand des Dämpfers 6 arbeiten muß.

Das Hydraulikaggregat 5 läßt sich über eine elektrisch betätigte Proportionalventilanordnung 7 steuerbar mit einer hydraulischen Druckquelle 8, welche als ständig mittels einer nicht dargestellten Hydraulikpumpe auf annähernd gleichbleibendem Druck gehaltener hydraulischer Druckspeicher ausgebildet sein kann, und/oder mit einem relativ drucklosen Reservoir 9 verbinden bzw. sowohl gegenüber der Druckquelle 8 als auch gegenüber dem Reservoir 9 absperren, wobei allerdings eine geringe Leckage auftreten kann.

Die Proportionalventilanordnung 7 wird mittels einer elektronischen Regelschaltung 10 in weiter unten dargestellter Weise betätigt. Dazu ist die Regelschaltung 10 eingangsseitig mit den nachfolgend angegebenen Sensoren verbunden.

Jedem Rad 1 bzw. Abstützaggregat 3 ist ein Wegsensor 11 zugeordnet, dessen Signal mit dem Abstand zwischen dem jeweiligen Rad 1 und dem Aufbau 2 korreliert ist. Statt einer direkten Abstandsmessung zwischen einem aufbauseitigen Punkt und einem radseitigen Punkt kann der Abstand auch dadurch ermittelt werden, daß der Schwenkwinkel eines dem jeweiligen Rad 1 zugeordneten zur Radführung dienenden Lenkers, z.B. eines Querlenkers, relativ zum Aufbau 2 ermittelt wird. Jedenfalls stehen der Regelschaltung 10 diese Abstände als Information zur Verfügung.

Am Fahrzeugaufbau sind zumindest drei Vertikalbeschleunigungssensoren 12 vorhanden, welche in Draufsicht von oben unterschiedliche Lage zum Aufbauschwerpunkt aufweisen. Aus den Signalen dieser Sensoren 12 vermag die Regelschaltung 10 Beschleunigungen des Aufbaus 2 in Vertikalrichtung, d.h. Hubbeschleunigungen, sowie beschleunigte Nick- und Wankbewegungen des Aufbaus 2, d.h. beschleunigte Rotationsbewegungen um die Längs- bzw. Querachse des Aufbaus 2, zu ermitteln und voneinander zu unterscheiden. Falls einer der Vertikalbeschleunigungssensoren 12 am Schwerpunkt des Fahrzeugaufbaus 2 angeordnet ist, entspricht das Signal dieses Sensors, für sich allein genommen, der Vertikalbeschleunigung des Aufbaus. Falls die drei Sensoren 12 alle einen mehr oder weniger großen Abstand in Draufsicht auf den Aufbau 2 von dessen Schwerpunkt haben, ist die Signalsumme dieser Sensoren 12 mit der Vertikalbeschleunigung des Fahrzeugaufbaus korreliert. Die Signaldifferenz zwischen zwei Sensoren 12, welche in Fahrzeuglängsrichtung unterschiedliche Lagen haben, ist mit der Nickbeschleunigung (Beschleunigung einer Nickbewegung) des Fahrzeugaufbaus korreliert. Die Signaldifferenz zwischen zwei in Fahrzeugquerrichtung unterschiedlich angeordneten Sensoren 12 ist mit der Wankbeschleunigung des Fahrzeugbaus korreliert.

Des weiteren sind am Fahrzeugaufbau 2 eine Sensoranordnung 13 für die Querbeschleunigung des Aufbaus 2 sowie eine Sensoranordnung 14 für die Längsbeschleunigung des Fahrzeugaufbaus 2 angeordnet.

Im Ergebnis stehen somit also Signale für eine Beschleunigung des Aufbaus in Längs-, Quer- und Vertikalrichtung sowie für beschleunigte Drehbewegungen des Aufbaus bezüglich der Längs-, Quer- und Hochachse zur Verfügung.

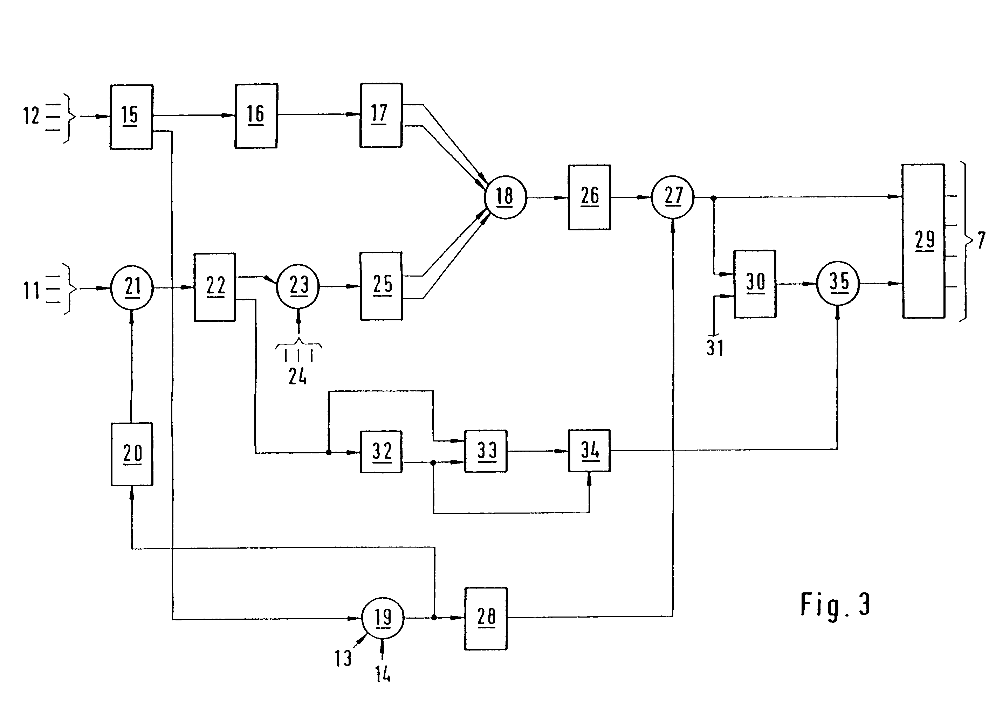

Gemäß Fig. 3 werden die Signale der Vertikalbeschleunigungssensoren 12 von einer Schaltungseinheit 15 verarbeitet, derart, daß ausgangsseitig dieser Einheit 15 Signale vorliegen, die die Hubbeschleunigung, die Nickbeschleunigung sowie die Wankbeschleunigung des Aufbaus 2 wiedergeben. Diese Signale werden gemäß einem für Straßenfahrzeuge bevorzugten Merkmal der Erfindung einer Hochpaßfilteranordnung 16 zugeführt, so daß ausgangsseitig dieser Filteranordnung 16 nur Signale mit instationären Anteilen der Hub-, Nick- und Wankbeschleunigungen des Aufbaus vorliegen.

Diese Signale werden einer Steuerschaltungseinheit 17 zugeführt, welche im dargestellten Beispiel zwei Ausgänge aufweist, die zu einer Summierschaltung 18 führen. Der eine Ausgang führt ein zum Eingang der Steuerschaltungseinheit 17 proportionales Signal, welches physikalisch mit einer gewünschten Dämpfung der jeweiligen beschleunigten Aufbaubewegung korreliert ist. Der zweite Ausgang erzeugt Signale, die dem Zeitintegral der Eingangssignale entsprechen und physikalisch eine gewünschte Gegenkraft repräsentieren, die der jeweiligen beschleunigten Aufbaubewegung entgegenwirken soll.

Die Ausgangssignale der Schaltungseinheit 15 werden außerdem einer Summierschaltung 19 zugeführt, die des weiteren die Signale der Sensoranordnungen 13 und 14 für die Quer- und Längsbeschleunigung des Fahrzeugaufbaus 2 erhält. Ausgangsseitig der Summierschaltung 19 liegen damit Informationen über die Aufbaubeschleunigungen bezüglich sämtlicher Freiheitsgrade des Aufbaus 2 vor. Physikalisch gesehen sind diese Signale auch ein Maß der auf den Aufbau 2 wirkenden äußeren Kräfte, jedenfalls dann, wenn Bewegungen der Nutzlast oder der Insassen eines Fahrzeuges vernachlässigt werden können. Diese äußeren Kräfte müssen bei einem Straßenfahrzeug praktisch vollständig an den Rädern wirksam werden und dementsprechend zu einer analogen Einfederung bzw. Verspannung der Reifen od.dgl. der Räder 1 führen. Mittels einer Schaltungseinheit 20 können nun die vorgenannten Beschleunigungssignale in solche Signale transformiert werden, die den Einfederzustand der Reifen, d.h. der von den Reifen der Räder 1 gebildeten ,,Reifenfeder" 1', wiedergeben. Diese Signale werden einer Summierschaltung 21 zugeführt und dort mit den Signalen der Wegsensoren 11 derart verknüpft, daß ausgangsseitig solche Signale vorliegen, die mit den Bodenabständen des Aufbaus 2 an den jeweiligen Rädern 1 korreliert sind. In ihrer Gesamtheit stellen diese Signale also eine Information über die Lage des Fahrzeugaufbaus 2 relativ zur Fahrbahn dar.

In der Schaltungseinheit 22 werden diese Signale so transformiert, daß ausgangsseitig Signale zur Verfügung stehen, die mit dem Istwert des mittleren Bodenabstandes des Fahrzeugaufbaus 2, dem Istwert des Wankwinkels sowie dem Istwert des Nickwinkels des Fahrzeugaufbaus 2 korreliert sind.

Nunmehr werden die vorgenannten Signale einer Summierschaltung 23 zugeführt, die von Sollwertgebern 24 Sollwertsignale für den mittleren Bodenabstand sowie den Nick- und den Wankwinkel des Aufbaus 2 erhält und einen Soll-Istwert-Vergleich durchführt. Damit erzeugt die Summierschaltung 23 ausgangsseitig Signale, die die Soll-Istwert-Abweichungen der IstLage des Fahrzeugaufbaus 2 gegenüber dessen Soll-Lage repräsentieren.

Die Ausgangssignale der Summierschaltung 23 werden dann in einer Steuerschaltungseinheit 25 mit zwei Ausgängen in prinzipiell gleicher Weise verarbeitet, wie die der Steuerschaltungseinheit 17 zugeführten Signale. Ein Ausgang der Steuerschaltungseinheit 25 erzeugt also Ausgangssignale, die proportional zu den Eingangssignalen sind, während ein anderer Ausgang der Steuerschaltungseinheit 25 Signale erzeugt, die dem Zeitintegral der Eingangssignale entsprechend.

Die Ausgangssignale der Steuerschaltungseinheit 25 werden in der Summierschaltung 18 mit den Ausgangssignalen der Steuerschaltungseinheit 17 kombiniert, d.h. ausgangsseitig der Summierschaltung 18 steht eine Signalgesamtheit zur Verfügung, die einerseits die gewünschten Gegenmaßnahmen gegen Aufbaubewegungen relativ zu einem erdfesten Bezugssystem sowie Gegenmaßnmahmen zum Ausgleich von Abweichungen zwischen der Istlage des Aufbaus relativ zum Boden und entsprechenden Sollwerten umfaßt. Diese Signale werden einer Tiefpaßfilteranordnung 26 zugeführt, um zu vermeiden, daß Aufbauschwingungen, die durch Motorvibrationen verursacht werden, oder durch Unwuchten der Räder bewirkte Radschwingungen bei der Betätigung der Proportionalventilanordnungen 7 berücksichtigt werden.

Hinter dem Tiefpaßfilter ist vorzugsweise eine weitere Summierschaltung 27 angeordnet, der neben den Ausgangssignalen des Tiefpaßfilters 26 die Ausgangssignale eines Differenzieranordnung 28 zugeführt werden, welches eingangsseitig die Ausgangssignale der Summierschaltung 19 verhält. Dementsprechend repräsentieren die Ausgangssignale der Differenzieranordnung 28 die Änderungen von Signalen, die mit auf den Aufbau 2 wirkenden äußeren Momenten in Hub- und Wankrichtung korreliert und sich aus den Änderungen der Hub-, Nick-, Wank-, Quer- und Längsbeschleunigungen des Aufbaus zusammensetzen.

Die Ausgangssignale der Summierschaltung 27 enthalten somit Signalanteile, die durch Bewegungsgeschwindigkeiten des Aufbaus 2 vorgegeben werden. Darüber hinaus umfassen die Ausgangssignale der Summierschaltung 27 Signalanteile, die durch die auf den Aufbau 2 wirkenden äußeren Momente in Nick- und Wankrichtung bestimmt werden. Schließlich sind Signalanteile vorhanden, die durch die Abweichung der Istlage des Aufbaus relativ zum Boden gegenüber einer entsprechenden Sollage vorgegeben werden.

Diese Signale werden nun in einer Endstufe 29 in elektrische Steuerströme für die Proportionalventilanordnungen 7 der Räder 1 des Fahrzeuges umgesetzt.

Dabei kann vorgesehen sein, die zum Ausgleich von Wankbewegungen des Aufbaus 2 vorgesehenen Verstellungen der Hydraulikaggregate 5 in vorgebbarer Weise ungleichmäßig auf die Vorder- und Hinterräder des Fahrzeuges wirken zu lassen. Hierfür können die zum Wankausgleich vorgesehenen Signalanteile einer Steuerschaltung 30 zugeführt werden, welche mit einem Sollwertgeber 31 verbunden ist, der die Aufteilung der für den Wankausgleich vorgesehenen Bewegungen der Hydraulikaggregate 5 auf die Vorder- und Hinterräder vorgibt. Damit kann die Endstufe 29, die über einen weiteren Eingang mit dem Ausgang der Steuerschaltung 30 verbunden ist, für den Wankausgleich eine entsprechende Aufteilung bei der Betätigung der Proportionalventilanordnungen 7 berücksichtigen.

Gemäß einer besonders bevorzugten Ausführungsform kann die Schaltungseinheit 22 aus den Eingangssignalen auch ein Signal herstellen, welches wiedergibt, inwieweit der Mittelwert der Bodenabstände des Aufbaus 2 an den einen einander diagonal gegenüberliegenden Rädern 1 (rechtes Vorderrad, linkes Hinterrad) von dem Mittelwert der Bodenabstände an den anderen einander diagonal gegenüberliegenden Rädern 1 (linkes Vorderrad, rechtes Hinterrad) abweicht. Bildlich stellt dieses Signal ein Maß für die Größe und Richtung der Verspannung des Aufbaus 2 dar. Die entsprechenden Signale können einem Filter 32 zugeführt werden, welcher diese Signale um ein vorgegebenes Maß verzögert. Das Ausgangssignale des Filters wird einer Diskriminatorschaltung 33 zugeführt, welche einen weiteren Eingang aufweist, der mit dem Eingang des Filters 32 verbunden ist. Die Diskriminatorschaltung 33 erzeugt ein Ausgangssignal mit dem Wert "1", wenn die Signale an den beiden Eingängen der Diskriminatorschaltung 33, d.h. das Filtereingangssignale und das Filterausgangssignal, gleiche Polarität bzw. gleiches Vorzeichen aufweisen. Andernfalls wird ein Ausgangssignal mit dem Wert "0" erzeugt. Dieses Ausgangssignal wird in einer Multiplikatorschaltung 34 mit dem Filterausgangssignal multipliziert. Im Ergebnis wird also das Filterausgangssignal ausgangsseitig der Multiplikatorschaltung 34 nur dann weitergegeben, wenn es gleiche Polarität bzw. gleiches Vorzeichen wie das Filtereingangssignal hat. Andererseits wird das Filterausgangssignal nicht weitergeleitet.

Das Ausgangssignal der Multiplikatorschaltung 34 kann also nur dann vorhanden sein, wenn eine aktuelle Verspannung des Aufbaus 2 vorzeichenmäßig mit der durch die Schaltung 32 zeitlich gemittelten Verspannung des Aufbaus 2 übereinstimmt. Auf diese Weise kann die Eingriffshäufigkeit der aktiven Stellelemente aufgrund einer tatsächlich vorhandenen Verspannung auf ein Mindestmaß reduziert werden ohne die eigentliche Funktion - nämlich diese Verspannung zu minimieren - zu gefährden.

Mittels einer Summierschaltung 35 kann die bereits vorliegende Verspannung des Aufbaus 2 beim Wankausgleich berücksichtigt werden.

Ein besonderer Vorzug der Erfindung liegt darin, daß bei üblichen Kombinationen von Proportionalventilanordnung 7 und Hydraulikaggregat 5 die Stellgeschwindigkeit des Hydraulikaggregates 5 proportional zum elektrischen Strom ist, welcher die Proportionalventilanordnung 7 betätigt. Dies gilt jedenfalls dann, wenn der Druck der Druckquelle 8 im Vergleich zu den an den Hydraulikaggregaten 5 wirksamen Kräften groß ist. Solche Bedingungen lassen sich leicht erfüllen. Dementsprechend kann bei dem erfindungsgemäßen System immer davon ausgegangen werden, daß die Stellgeschwindigkeit eines Hydraulikaggregates 5 dem elektrischen Strom zur Betätigung der zugeordneten Proportionalventilanordnung 7 entspricht. Damit ist ein exakt reproduzierbares Ansprechverhalten gegeben.

Andererseits kann bei einem System der erfindungsgemäßen Art eine vorgegebene Federungscharakteristik immer dann durch entsprechende Bemessung der Schaltungselemente erreicht werden, wenn davon ausgegangen werden kann, daß die von der Endstufe 29 erzeugten elektrischen Ströme zur Betätigung der Proportionalventilanordnungen 7 proportional den Stellgeschwindigkeiten der jeweiligen Hydraulikaggregate 5 sind.

## Patentansprüche

1. Aktives Federungssystem für Fahrzeuge, mit zwischen einem Fahrzeugaufbau (2) und Rädern (1) mit darin oder daran vorhandenen Federelementen (1'), insbesondere Reifenfedern, angeordneten Abstützaggregaten (3), die jeweils ein aktiv hubverstellbares Stellorgan (5) und eine dazu in Reihe angeordnete passive Feder (4) aufweisen, und mit automatischer Steuerung (10) der Stellorgane, wobei jedem Abstützaggregat ein Wegsensor (11) zur Erzeugung eines mit der Hubstellung des Abstützaggregates korrelierten Signales zugeordnet und am Fahrzeugaufbau eine Anordnung von Beschleunigungssensoren (12,13,14) zur Erzeugung von Signalen für die aufbauseitigen Längs- und Querbeschleunigungen sowie Hubbewegungen vorgesehen ist, und wobei zur Steuerung der Stellorgane dienende Stellsignale einen durch Signale von Beschleunigungssensoren erzeugten ersten Anteil und einen durch Signale von Weg- und Beschleunigungssensoren erzeugten zweiten Anteil umfassen,
**dadurch gekennzeichnet,**
daß der erste Anteil durch die von den Beschleunigungssensoren (12 bis 14) ermittelten Nick-, Wank- und Hubbewegungen des Aufbaus (2) und der zweite Anteil durch Vergleich von vorgebbaren Sollwerten für die Lage des Aufbaus (2) relativ zum Boden mit zugeordneten Istwerten bestimmt wird, die rechnerisch aus den Hubstellungen der Abstützaggregate (3) und zumindest den Aufbaubeschleunigungen in Längs- und Querrichtung ermittelt werden.

2. Federungssystem nach Anspruch 1,
**dadurch gekennzeichnet,**
daß parallel zur Feder (4) oder parallel zu Stellorgan (5) und Feder (4) ein Dämpfer (6) angeordnet ist.

3. Federungssystem nach Anspruch 1 oder 2,
**dadurch gekennzeichnet,**
daß die passive Feder (4) relativ hart ist.

4. Federungssystem nach den Ansprüchen 2 und 3,
**dadurch gekennzeichnet,**
daß der Dämpfer (6) relativ weich ist.

5. Federungssystem nach einem der Ansprüche 1 bis 4,
**dadurch gekennzeichnet,**
daß die Stellsignale einen Anteil umfassen, welcher vom Maß der Änderung einer Aufbaubeschleunigung abhängt.

6. Federungssystem nach einem der Ansprüche 1 bis 5,
**dadurch gekennzeichnet,**
daß die zur Erzeugung des ersten Signalanteiles dienenden Signale ein Hochpaßfilter (16) durchlaufen.

7. Federungssystem nach einem der Ansprüche 1 bis 6,
**dadurch gekennzeichnet,**
daß die ersten und zweiten Signalanteile ein Tiefpaßfilter (26) durchlaufen.

8. Federungssystem nach einem der Ansprüche 1 bis 7,
**dadurch gekennzeichnet,**
daß als Stellorgane Hydraulikaggregate (5) vorgesehen sind, welche mittels elektrisch betätigter Proportionalventilanordnungen (7) gesteuert werden, und daß die Stellgeschwindigkeit der Hydraulikaggregate (5) proportional dem elektrischen Strom zur Betätigung der jeweiligen Proportionalventilanordnungen (7) ist.

## Claims

1. Active suspension system for vehicles with support aggregates (3) positioned between a vehicle structure (2) and wheels (1) with spring elements (1'), in particular tyre springs, therein or thereupon, wherein these support aggregates (3) respectively have an active lift adjustable set organ (5) and a passive spring (4) arranged in a line thereto, and with automatic control of the set organs, wherein each support aggregate is associated with a path sensor (11) for producing a signal correlated with the lift positioning of the support aggregate and on the vehicle structure there is an arrangement of acceleration sensors (12, 13, 14) for producing signals for the structure-side longitudinal and cross-wise accelerations as well as lift movements, and wherein position signals for controlling the set organs have a first portion produced through signals of acceleration signals and a second party produced through signals of path and acceleration sensors,
characterised in that
the first portion is determined through the swaying, nodding and lifting movements of the structure (2) determined by the acceleration sensors (12 to 14) and the second portion is determined through the comparison of specifiable reference values for the position of the structure (2) relative to the ground with associated actual values, which are arithmetically determined from the lift positions of the support aggregates (3) and at least the structure accelerations in longitudinal and cross-wise direction.

2. Suspension system according to Claim 1
characterised in that
parallel to the spring (4) or parallel to the set organ (5) and spring (4) there is a damper (6).

3. Suspension system according to Claim 1 or 2
characterised in that
the passive spring is relatively hard.

4. Suspension system according to Claims 2 and 3
characterised in that
the damper (6) is relatively soft.

5. Suspension system according to one of the Claims 1 to 4
characterised in that
the position signals have a portion which depends upon the extent of the changing of a structure acceleration.

6. Suspension system according to one of the Claims 1 to 5
characterised in that
the signals serving for the production of the first signal portion run through a high adaptation filter (16).

7. Suspension system according to one of the Claims 1 to 6
characterised in that
the first and second signal portions run through a low adaptation filter.

8. Suspension system according to one of the Claims 1 to 7
characterised in that
hydraulic aggregates (5) are provided as set organs, wherein these hydraulic aggregates (5) are controlled by means of electrically activated proportional valve arrangements (7) and in that the position speed of the hydraulic aggregates (5) is proportional to the electric current for activating the respective proportional valve arrangements (7).

## Revendications

1. Système de suspension actif pour des véhicules, avec des groupes de soutien (3), disposés entre une carrosserie de véhicule (2) et des roues (1), dans ou sur lesquelles sont montés des éléments élastiques (1'), en particulier des ressorts constitués de bandages pneumatiques, groupes de soutien présentant chacun un organe de réglage (5), à réglage actif de la course, et un ressort passif (4), disposé en série par rapport à cet organe de réglage, et avec une commande automatique (10) des organes de réglage, à chaque groupe de soutien étant associé un capteur de déplacement (11) pour générer un signal corrélé à la position en course du groupe de soutien et, sur la carrosserie de véhicule, étant prévu un agencement de capteurs d'accélération (12,13,14) pour générer les signaux concernant les accélérations longitudinales ou transversales, ainsi que les mouvements de course, côté carrosserie, et des signaux de réglage, servant à assurer la commande des organes de réglage, comprennant une première partie, générée par des signaux émanant des capteurs d'accélération, et une deuxième partie, générée par des signaux émanant des capteurs de déplacement et d'accélération,
caractérisé en ce que.,
la première partie est déterminée par les mouvements de tangage, de roulis et de course de la carrosserie (2) et la deuxième partie est déterminée par comparaison, entre des valeurs de consigne, pouvant être prédéterminées, concernant la position de la carrosserie (2) par rapport au sol, et des valeurs réelles associées, qui sont déterminées par calcul à partir des positions de course des groupes de soutien (3) et au moins les accélérations de la carrosserie, dans la direction longitudinale et transversale.

2. Système de suspension selon la revendication 1,
caractérisé en ce qu'un amortisseur (6) est disposé parallèlement au ressort (4), ou parallèlement à l'organe de réglage (5) et au ressort (4).

3. Système de suspension selon la revendication 1 ou 2, caractérisé en ce le ressort passif (4) est relativement dur.

4. Système de suspension selon les revendications 2 et 3, caractérisé en ce que l'amortisseur (6) est relativement souple.

5. Système de suspension selon l'une des revendications 1 à 4, caractérisé en ce que.les signaux de réglage comprennent une partie qui dépend de la valeur de la fluctuation de l'accélération de la carrosserie.

6. Système de suspension selon l'une des revendications 1 à 5, caractérisé en ce que les signaux servant à générer la première partie de signal passent par un filtre passe-haut (16).

7. Système de suspension selon l'une des revendications 1 à 6, caractérisé en ce que les première et deuxième parties de signaux passent par un filtre passe-bas (26).

8. Système de suspension selon l'une des revendications 1 à 7, caractérisé en ce que sont prévus comme organes de réglage des groupes hydrauliques (5) qui sont commandés au moyen de dispositifs à soupape proportionnelle (7) actionnés électriquement, et en ce que la vitesse de réglage des groupes hydrauliques (5) est proportionnelle au courant électrique assurant l'actionnement des dispositifs à soupape proportionnelle (7) respectifs.
